(19) Europäisches Patentamt
European Patent Office
Office européen des brevets

(11) **EP 2 002 216 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **07702852.0**

(22) Anmeldetag: **18.01.2007**

(51) Int Cl.:
**G01D 5/347** *(2006.01)*

(86) Internationale Anmeldenummer:
**PCT/EP2007/000404**

(87) Internationale Veröffentlichungsnummer:
**WO 2007/112796 (11.10.2007 Gazette 2007/41)**

(54) **VERFAHREN ZUM HALTEN EINES MASSSTABS AN EINEM TRÄGER SOWIE ANORDNUNG MIT EINEM TRÄGER UND EINEM MASSSTAB**

METHOD FOR HOLDING A SCALE ON A CARRIER AND ARRANGEMENT HAVING A CARRIER AND A SCALE

PROCEDE DE MAINTIEN D'UNE ECHELLE DE MESURE SUR UN SUPPORT ET SYSTEME DOTE D'UN SUPPORT ET D'UNE ECHELLE DE MESURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.03.2006 DE 102006014789**

(43) Veröffentlichungstag der Anmeldung:
**17.12.2008 Patentblatt 2008/51**

(73) Patentinhaber: **Dr. Johannes Heidenhain GmbH 83301 Traunreut (DE)**

(72) Erfinder:
• **HOLZAPFEL, Wolfgang 83119 Obing (DE)**
• **SPECKBACHER, Peter 84558 Kirchweidach (DE)**

(56) Entgegenhaltungen:
**EP-A- 0 288 613     DE-A1- 10 153 147
US-A- 5 838 529     US-A1- 2003 165 043**

**Beschreibung**

Die Erfindung betrifft ein Verfahren zum Halten eines Maßstabs an einem Träger.

Zur Messung der Relativlage zweier Maschinenteile ist an einem der Maschinenteile ein Maßstab zu befestigen und am anderen der zueinander beweglichen Maschinenteile eine Abtasteinheit. Bei der Positionsmessung wird eine Messteilung des Maßstabs von der Abtasteinheit abgetastet.

Zur hochgenauen Positionsmessung ist es notwendig, dass der Maßstab stabil und driftfrei am Träger gehalten wird. Eine hohe Stabilität und Driftfreiheit im Nano- und Subnanometerbereich verlangt einen äußerst kurzen Kraftweg, der möglichst auf die Kontaktfläche beschränkt bleiben soll und nicht die gesamte Dicke des Maßstabs einschließen sollte.

Ein kurzer, möglichst auf die Kontaktfläche beschränkter Kraftweg lässt sich beispielsweise durch Ansprengen (atomare van-der-Waals-Kräfte) erreichen. Dabei werden vorzugsweise Maßstäbe aus Glas oder Glaskeramik mit vernachlässigbarem Ausdehnungskoeffizienten eingesetzt. Diese Maßstäbe lassen sich gut bearbeiten, so dass hier das Ansprengen an optisch polierten Gegenflächen gebräuchlich ist, wie in der DE 101 53 147 A1 beschrieben. Ansprengen ist eine sehr driftstabile Befestigungsmethode für Maßstäbe. Bei einer Ansprengung besteht aber die Gefahr, dass sich der Maßstab abschält bzw. partiell löst. Die Außenränder eines angesprengten Maßstabs können daher labil sein, wenn am Rande Wechselbelastungen auftreten (z.B. durch Beschleunigung oder Temperaturvariationen) und dadurch diese Randzonen wiederkehrend abgeschält und angesprengt werden. Darüber hinaus ist ein angesprengter Maßstab nur schwer wieder vom Träger lösbar und somit ein Austausch eines beschädigten Maßstabs nur schwer möglich.

Eine weitere bekannte Methode zum Halten eines Maßstabs an einem Träger ist das Kleben im Bereich der Auflagefläche. Je nach Art des Klebers und Dicke der Klebung kann es durch Schrumpfungsprozesse des Klebers zu Verspannungen zwischen Träger und Maßstab kommen, welche zu nicht reproduzierbaren Längenfehlern im Maßstab führen. Diese Schrumpfungsprozesse im Kleber werden z. B. durch Alterung des Klebers, durch Temperatur- und Luftfeuchteänderungen induziert. Aufgeklebte Maßstäbe sind auch schwer wieder ablösbar, sie lassen sich kaum rückstandsfrei ablösen.

Aufgabe der Erfindung ist es, ein Verfahren anzugeben, mit dem ein Maßstab möglichst driftstabil aber lösbar an einem Träger gehalten werden kann.

Gelöst wird diese Aufgabe durch ein Verfahren gemäß dem Anspruch 1.

Eine weitere Aufgabe der Erfindung ist es, eine Anordnung mit einem Träger und mit einem daran lösbar und trotzdem stabil befestigten Maßstab anzugeben.

Gelöst wird diese Aufgabe durch eine Anordnung gemäß dem Anspruch 8.

Vorteilhafte Ausbildungen der Erfindung sind in den abhängigen Ansprüchen angegeben.

Vorteile der Erfindung sind der Beschreibung der Ausführungsbeispiele zu entnehmen. Diese Ausführungsbeispiele der Erfindung werden nachfolgend anhand der Zeichnungen näher erläutert.

Es zeigen

Figur 1    ein erstes Ausführungsbeispiel einer Anordnung mit einem Träger und einem daran befestigten Maßstab in einer Seitenansicht;

Figur 2    die Anordnung gemäß Figur 1 in Draufsicht;

Figur 3    ein zweites Ausführungsbeispiel einer Anordnung mit einem Träger und einem daran befestigten Maßstab in einer Seitenansicht;

Figur 4    ein drittes Ausführungsbeispiel einer Anordnung mit einem Träger und einem daran befestigten Maßstab in einer Seitenansicht;

Figur 5    ein viertes Ausführungsbeispiel einer Anordnung mit einem Träger und einem daran befestigten Maßstab in einer Seitenansicht;

Figur 6    die Anordnung gemäß Figur 5 in Draufsicht;

Figur 7    ein fünftes Ausführungsbeispiel einer Anordnung mit einem befestigten Maßstab in einer Draufsicht;

Figur 8    die Anordnung gemäß Figur 7 im Querschnitt;

Figur 9    ein sechstes Ausführungsbeispiel einer Anordnung mit einem Träger und einem daran befestigten Maßstab in einer Draufsicht;

Figur 10    ein siebtes Ausführungsbeispiel einer Anordnung mit einem Träger und einem daran befestigten Maßstab in einer Draufsicht;

Figur 11    ein achtes Ausführungsbeispiel einer Anordnung mit einem Träger und einem daran befestigten Maßstab in einer Seitenansicht;

Figur 12    ein neuntes Ausführungsbeispiel einer Anordnung mit einem Träger und einem daran befestigten Maßstab in einer Seitenansicht;

Figur 13    ein zehntes Ausführungsbeispiel einer Anordnung mit einem Träger und einem daran befestigten Maßstab in einer Seitenansicht;

Figur 14    ein elftes Ausführungsbeispiel einer Anordnung mit einem Träger und einem daran befestigten Maßstab in einer Seitenansicht;

Figur 15 ein zwölftes Ausführungsbeispiel einer Anordnung mit einem Träger und einem daran befestigten Maßstab in einer Draufsicht;

Figur 16 die Anordnung gemäß Figur 15 im Schnitt;

Figur 17 ein dreizehntes Ausführungsbeispiel einer Anordnung mit einem Träger und einem daran befestigten Maßstab in einer Seitenansicht;

Figur 18 ein vierzehntes Ausführungsbeispiel einer Anordnung mit einem Träger und einem daran befestigten Maßstab in einer Seitenansicht und

Figur 19 ein fünfzehntes Ausführungsbeispiel einer Anordnung mit einem Träger und einem daran befestigten Maßstab in einer Seitenansicht.

Grundlage der Erfindung und somit aller nachfolgenden Ausführungsbeispiele ist die Halterung eines Maßstabs 1 an einem Träger 2 mittels elektrostatischer Klemmung. Diese elektrostatische Klemmung beruht auf der Anziehung zweier entgegengesetzt geladener Körper. Dabei wird der Maßstab 1 gemäß der Erfindung durch direkte elektrostatische Klemmung am Träger 2 befestigt. Durch Anlegen einer elektrischen Spannung U wird ein Potentialgefälle direkt zwischen den aneinander zu haltenden Körpern, nämlich dem Maßstab 1 und dem Träger 2 generiert.

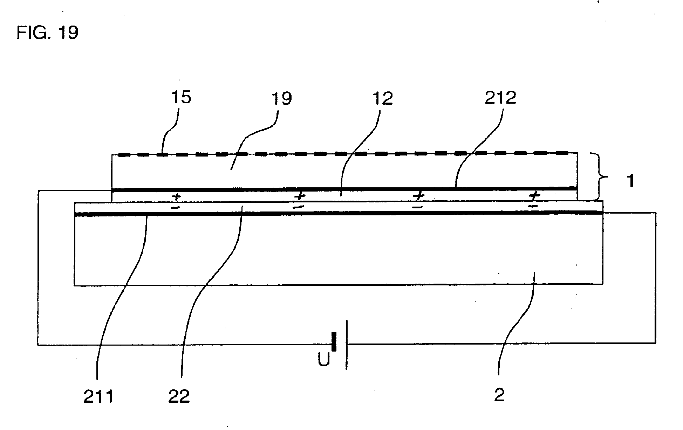

Man unterscheidet zwischen unipolarer elektrostatischer Klemmung und bipolarer elektrostatischer Klemmung. Bei der zeichnerisch nur anhand der Figur 19 dargestellten unipolaren elektrostatischen Klemmung weist jeder der aneinander zu klemmenden Körper 1 und 2 jeweils eine spannungsführende Elektrode 211, 212 als Anode bzw. Kathode auf, an der eine Spannung U anliegt und dadurch die beiden einander gegenüberliegenden Elektroden 211, 212 entgegengesetzt aufgeladen werden. Der Träger 2 ist dabei als spannungsführende Elektrode (elektrisch leitendes Material oder Halbleitermaterial) bzw. mit einer spannungsführenden Elektrode (insbesondere Beschichtung mit einem elektrisch leitenden Material oder Halbleitermaterial) und der eine Messteilung 15 aufweisende Maßstab 1 als Gegenelektrode (aus elektrisch leitendem Material oder Halbleitermaterial bzw. Beschichtung eines aus nichtleitendem Material bestehenden Maßstab mit einem elektrisch leitenden Material oder Halbleitermaterial) auszugestalten. Zwischen den Elektroden 211, 212 ist ein Dielektrikum 12, 22 vorzusehen, im dargestellten Beispiel ist eine Schicht Dielektrikum 12 am Substrat 19 des Maßstabs 1 und eine Schicht Dielektrikum 22 am Träger 2 angebracht. Bei dieser Halterung ist es nachteilig, dass der Maßstab 1 und der Träger 2 jeweils mit einem Stromanschluss versehen sind.

Bei der bipolaren elektrostatischen Klemmung sind die spannungsführenden Elektroden, welche an die Spannungsquelle angeschlossen sind gemeinsam an einem der zu verbindenden Körper angeordnet und die Elektrode am anderen Körper bildet eine Art Koppelelektrode, in der sich partiell im Bereich gegenüberliegend zu den spannungsführenden Elektroden Gegenladungen ausbilden. Dabei kann der Träger 2 oder der Maßstab 1 die beiden spannungsführenden, also kontaktierten Elektroden aufweisen. Die bipolare Klemmung ist zu bevorzugen, da der Kontaktierungsaufwand auf einem Bauteil beschränkt bleiben kann.

Zur Halterung eines Maßstabs 1 aus Glas oder Glaskeramik (z. B. ZERODUR) wird daher bevorzugt die bipolare elektrostatische Klemmung eingesetzt. Dabei sind beide spannungsführenden Elektroden Anode 211 und Kathode 212 gemeinsam auf dem Träger 2 vorgesehen und die Gegenelektrode bildet sich jeweils in einem elektrisch leitenden Körper 11 des Maßstabs 1 aus. In allen nachfolgend ausführlich erläuterten und besonders vorteilhaften Ausführungen der Erfindung ist daher die bipolare elektrostatische Klemmung realisiert und die spannungsführenden Elektroden 211, 212 sind gemeinsam am Trägerkörper 2 angeordnet. Diese Anordnung erleichtert die Handhabung des Maßstabs 1, da nur der Trägerkörper 2 mit elektrischen Kontakten und Zuleitungen versehen werden muss.

In allen Figuren werden funktional gleich wirkende Elemente mit dem gleichen Bezugszeichen versehen. Die Dicken der Schichten sind dabei stark vergrößert dargestellt.

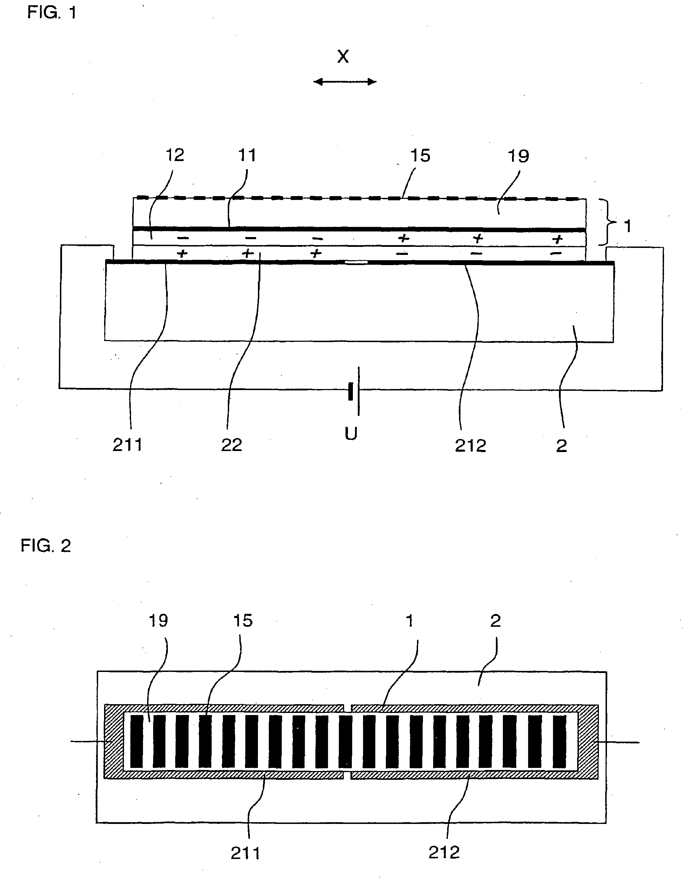

In den Figuren 1 und 2 ist ein erstes Ausführungsbeispiel der Erfindung dargestellt. Figur 1 zeigt die Seitenansicht des Trägers 2 mit dem durch elektrostatische Klemmung daran gehaltenen Maßstab 1 und Figur 2 die Draufsicht. Der Maßstab 1 weist eine Messteilung 15 in Form einer inkrementalen Messteilung 15 auf, die zur Positionsmessung in Messrichtung X lichtelektrisch abtastbar ist. Die Messteilung 15 kann ein reflektierendes Amplitudengitter oder ein Phasengitter sein, das in bekannter Weise zur hochgenauen interferentiellen Positionsmessung dient.

Der Maßstab 1 besteht aus einem Substrat 19 aus Glas oder Glaskeramik, z. B. ZERODUR und weist an seiner Unterseite eine Elektrode in Form einer leitfähigen, dünnen Metallschicht 11 auf, die mit einem dünnen Dielektrikum 12 abgedeckt ist. Der Träger 2 hat an seiner Oberseite eine Elektrode in Form einer dünnen Metallschicht 211, 212, die ebenfalls mit einem dünnen Dielektrikum 22 abgedeckt ist. Die Metallschicht 211, 212 des Trägers 2 ist in Form von zwei getrennten spannungsführenden Elektroden 211 und 212 strukturiert, an die durch außen liegende Kontaktstellen eine elektrische Spannung U angelegt wird. Im Beispiel ist die Elektrode 211 als Anode und die Elektrode 212 als Kathode ausgeführt. Durch die Spannung U werden in der Metallschicht 11 des Maßstabs 1 jeweils Gegenladungen gegenüber den Elektroden 211 und 212 induziert, die zu Haltekräften führen, welche den Maßstab 1 an den Träger 2 pressen. Aus zeichnerischen Gründen sind die Ladungen + und - nur schematisch neben den Elektroden 11, 211, 212 gezeichnet. Der entstehende Anpressdruck p lässt sich durch folgende Beziehungen berechnen:

$$p = \frac{1}{2} \cdot \varepsilon_0 \cdot (\frac{\varepsilon_R \cdot U}{d + a \cdot \varepsilon_R})^2,$$

mit

$\varepsilon_0$: Dielektrizitätskonstante des Vakuums (=8,854·10$^{-12}$ F/m)

$\varepsilon_R$: relative Dielektrizitätskonstante der Kombination des Dielektrikums 12 des Maßstabs 1 und des Dielektrikums 22 des Trägers 2

U: angelegte Spannung

d: Gesamtdicke beider Dielektrika 12 und 22 auf Maßstab 1 und Träger 2

a: Luftstrecke (falls vorhanden) zwischen Maßstab 1 und Träger 2

Für einen Anpressdruck von 5 bar und einer relativen Dielektrizitätskonstante $\varepsilon_R$ von 10 benötigt man eine Spannung U = 34 V/$\mu$m d, falls die Luftstrecke a=0 ist. Günstige Dielektrika sind $Si_3N_4$, $Ta_2O_5$, $Y_2O_3$, $Al_2O_3$ oder AIN. Sie besitzen eine hohe relative Dielektrizitätskonstante $\varepsilon_R$ und eine hohe Durchschlagsfestigkeit.

Für $Ta_2O_5$, das eine relative Dielektrizitätskonstante $\varepsilon_R$ = 28 und eine Durchschlagsfestigkeit bis zu 450 V/$\mu$m aufweist, benötigt man für eine Schichtdicke von d = 2 $\mu$m nur eine Spannung von U = 24 V, um einen Anpressdruck von 5 bar zu erreichen. Die auftretende Feldstärke bleibt dabei weit unter der Durchschlagsfestigkeit des Dielektrikums.

Typische Schichtdicken für die Metallschichten 11 und 211, 212, welche die Elektroden bilden, liegen zwischen 20 nm und 2 $\mu$m, diejenigen für das Dielektrikum 12 und 22 zwischen 50 nm und 400 $\mu$m. Als Material für die Metallschichten 11 und 211, 212 sind spannungsarme Metalle wie Aluminium vorteilhaft. Für die Elektroden können auch durchsichtige und elektrisch leitfähige Schichten "TCO" (thin conductive layer) wie z.B. ITO, ZnO oder SnO eingesetzt werden. Dies ist dann vorteilhaft, wenn Lichtbündel den transparenten Maßstab 1 und den transparenten Träger 2 durchdringen sollen, was beispielsweise bei der Verwendung in Lithografie-Einrichtungen vorteilhaft sein kann.

Bei dem ersten Ausführungsbeispiel werden die sich gegenseitig berührenden Kontaktflächen von Maßstab 1 und Träger 2 jeweils von dem Dielektrikum 12 und 22 gebildet. Diese Kontaktflächen sind großflächig zumindest weitgehend über die gesamte Ausdehnung des Maßstabs 1 ausgeführt.

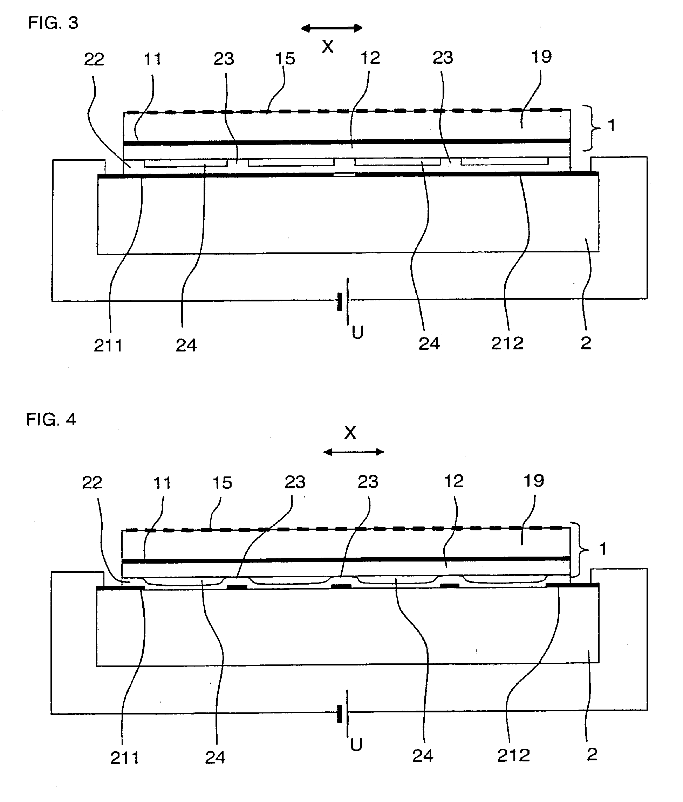

Die Flächen, an denen der Maßstab 1 Kontakt mit dem Träger 2 hat (Kontaktflächen) können in vorteilhafter Weise auch derart ausgebildet sein, dass sich nicht die gesamten zugewandten Flächen von Maßstab 1 und Träger 2 (Montageflächen) gegenseitig berühren. Dabei sind am Maßstab 1 und/oder am Träger 2 voneinander beabstandete Erhebungen 23 ausgebildet, welche die Kontaktflächen bilden. Dies hat den Vorteil, dass beim Zusammenfügen von Maßstab 1 und Träger 2 Luft aus dem Zwischenraum durch die Kanäle 24 zwischen den Erhebungen 23 nach außen entweichen kann. Derartige Ausgestaltungen sind in den Figuren 3 bis 9, 11, 12, 15, 16 und 18 dargestellt.

Bei dem in Figur 3 dargestellten zweiten Ausführungsbeispiel ist das Dielektrikum 22 des Trägers 2 strukturiert, indem in ihm abwechselnd Erhebungen 23 und Vertiefungen 24 ausgebildet sind. Die Kontaktfläche wird dadurch gegenüber der Montagefläche klein und in viele kleine Einzelflächen über die Montagefläche verteilt. Dadurch wird einerseits eine fast gleichmäßige Verteilung der Haltekraft erreicht, andererseits wird aber das Risiko minimiert, dass ein Staubkorn im Bereich der Kontaktflächen zu liegen kommt und den Maßstab 1 verbiegt. Die Anforderung an die Staubfreiheit der Montagefläche sinkt dadurch erheblich. Die Strukturierung des Dielektrikums 22 kann entweder durch eine stellenweise Reduzierung der Dicke erreicht werden oder durch einen vollständigen Abtrag. Die Ausbildung von Erhebungen 23 und Vertiefungen 24 durch Strukturierung kann in nicht gezeigter Weise alternativ oder zusätzlich auch aufseiten des Maßstabs 1 erfolgen, indem alternativ oder zusätzlich das Dielektrikum 12 des Maßstabs 1 entsprechend strukturiert wird.

Abwechselnd angeordnete Erhebungen 23, welche zwischen den Erhebungen 23 liegende und nach außen führende Kanäle 24 bilden, können auch durch eine strukturierte Metallschicht 11 des Maßstabs 1 und/oder eine Metallschicht 211, 212 des Trägers 2 geschaffen werden. Dabei wird ein Höhenprofil geschaffen und das Dielektrikum 12, 22 flächig aufgetragen, wie in Figur 4 anhand der Metallschichten 211, 212 des Trägers 2 dargestellt ist. Die Kanäle 24 sind vorzugsweise durchgehend bis zum äußeren Umgebungsbereich offen, damit ein Druckausgleich stattfinden kann und ggf. eingeschlossene Luft entweichen kann.

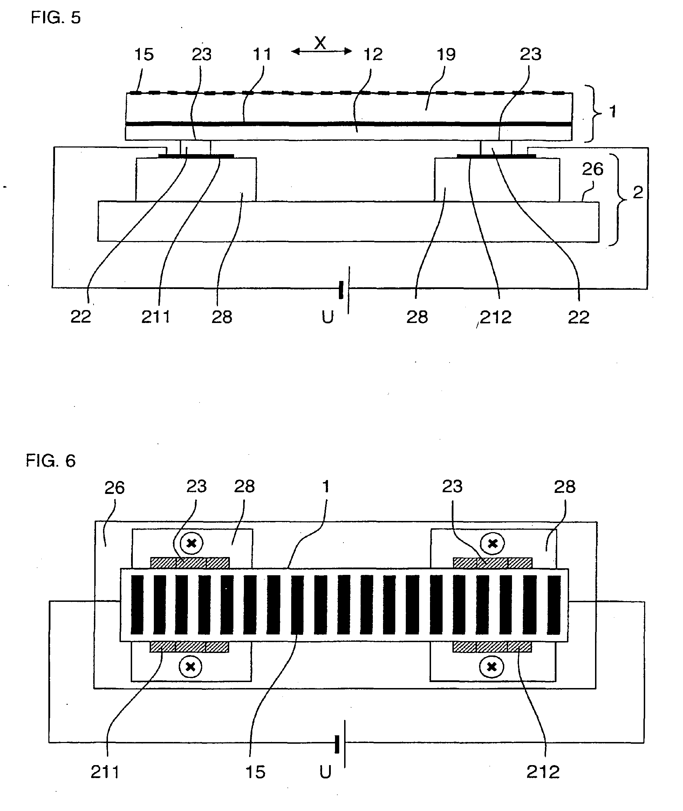

Bei der Ausführung gemäß den Figuren 5 und 6 werden die Erhebungen 23 als Kontaktflächen im Bereich der Besselpunkte eines länglichen Maßstabs 1 gelegt. Die Erhebungen 23, welche die Auflagen für den Maßstab 1 im Bereich der Besselpunkte bilden, garantieren eine minimale Verbiegung des Maßstabs 1 bedingt durch die Schwerkraft. Die Elektroden 211, 212 werden symmetrisch zu den Besselpunkten und somit zu den Auflageflächen angeordnet, damit im Bereich der Auflage kein resultierendes Drehmoment auf den Maßstab 1 wirkt. Der Vorteil dieser Ausführungsform liegt darin, dass die Ebenheit des Trägers 2 allenfalls einen vernachlässigbaren Einfluss auf die Verspannung und Ebenheit des Maßstabs 1 hat und damit nicht mehr so präzise gefertigt werden muss. In der Praxis erreicht man eine extrem hohe Genauigkeit einer Positionsmesseinrichtung mit einer derartigen Anordnung von Maßstab 1 und Träger 2.

Der Träger 2 besteht dabei aus Auflageelementen 28 an einem Grundkörper 26. Die Auflageelemente 28 können am Grundkörper 26 angesprengt, angeklebt, angeklemmt oder angeschraubt sein. Zwischen den Auflageelementen 28 und dem Grundkörper 26 können auch Festkörpergelenke angeordnet sein, welche einerseits die Anschraubkräfte nicht auf den Maßstab 1 übertragen und/oder andererseits eine möglichst kräftefreie Längenausdehnung von Maßstab 1 relativ zum Grundkörper 26 zulassen.

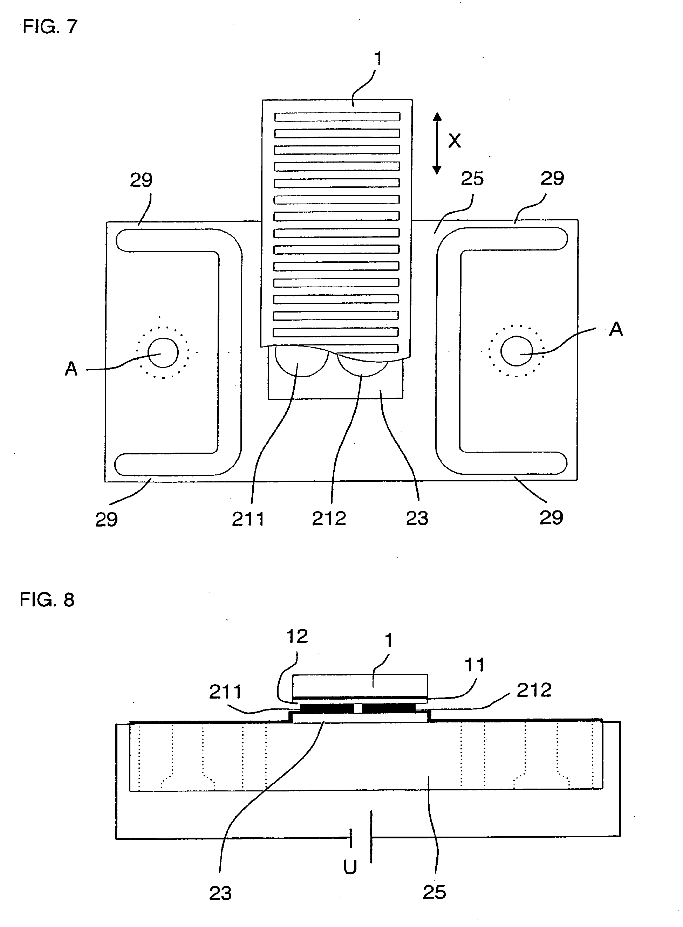

Eine mögliche Anordnung mit Festkörpergelenken ist in den Figuren 7 und 8 dargestellt. In Figur 7 ist eine Draufsicht eines Auflageelementes 25 mit beidseitig des Maßstabs 1 angeordneten Festkörpergelenken 29 dargestellt. Die Festkörpergelenke 29 sind quer zur Messrichtung X verlaufende Materialstege, die eine in Messrichtung X gerichtete Bewegung des Auflageelementes 25 relativ zur Anschraubstelle A zulassen. Die Anschraubstelle A dient zur ortsfesten Fixierung des Auflageelementes 25 an einem in den Figuren 5 und 6 dargestellten Grundkörper 26.

Figur 8 zeigt einen Querschnitt dieser Anordnung. Die am Auflageelement 25 angebrachten Elektroden 211, 212 sind an eine elektrische Spannung U angeschlossen und wirken mit der am Maßstab 1 angebrachten Elektrode 11 zusammen. Zwischen den Elektroden 211 und 11 sowie 212 und 11 ist jeweils das Dielektrikum 12 vorgesehen.

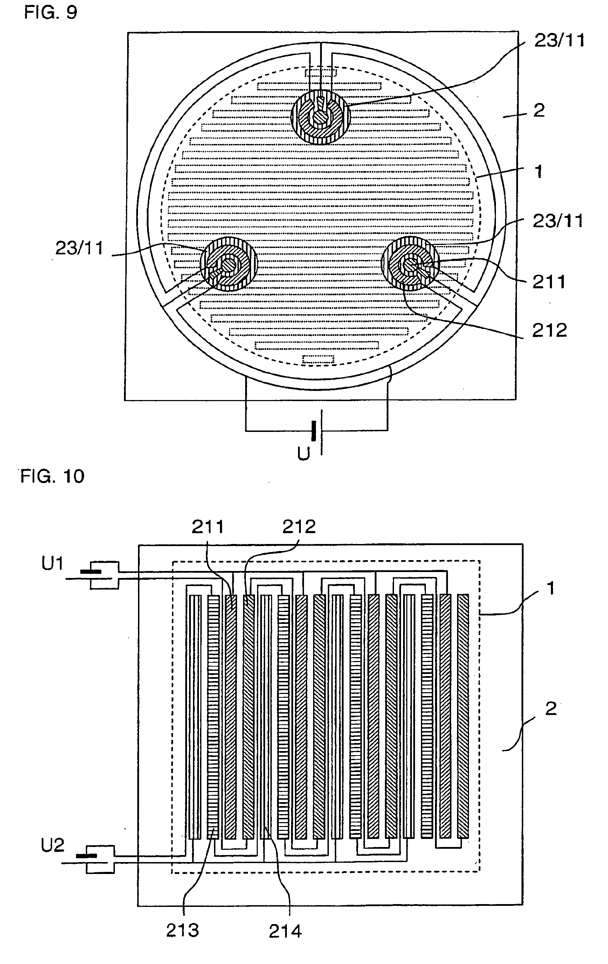

Figur 9 zeigt die elektrostatische Klemmung eines flächigen zweidimensional ausgedehnten Maßstabs 1, wie er z.B. bei zweidimensional messenden Kreuzgittermessgeräten üblich ist. Dabei sind drei um 120° versetzte, symmetrisch angeordnete Erhebungen 23 vorgesehen. Der radiale Abstand vom Zentrum wird so gewählt, dass trotz der Schwerkraft ein möglichst geringer Neigungswinkel oder eine möglichst hohe Ebenheit erreicht wird. Die Elektroden 11 auf dem Maßstab 1 sollten hier im Wesentlichen auf die Elektrodenflächen 211, 212 des Trägers 2 beschränkt bleiben und werden vorteilhafterweise bipolar ausgeführt.

Bei der Ausführungsform gemäß Figur 10 werden zwei voneinander unabhängige Paare von Elektroden 211, 212 sowie 213, 214 vorgesehen, die von zwei unabhängigen Spannungsquellen U1, U2 versorgt werden. Fällt eine der Spannungsversorgungen aus, so bleibt der Maßstab 1 dennoch befestigt. Natürlich können auch noch mehrere Paare von Elektroden und unabhängige Spannungsversorgungen vorgesehen sein, um die Sicherheit zu erhöhen. Diese Ausführungsform ist insbesondere dann vorteilhaft, wenn Batterien als Spannungsquellen vorgesehen sind. Die Elektrodenstruktur 211, 212 sowie 213, 214, die jeweils einer Spannungsquelle zugeordnet ist, sollte möglichst über die Montagefläche verteilt sein.

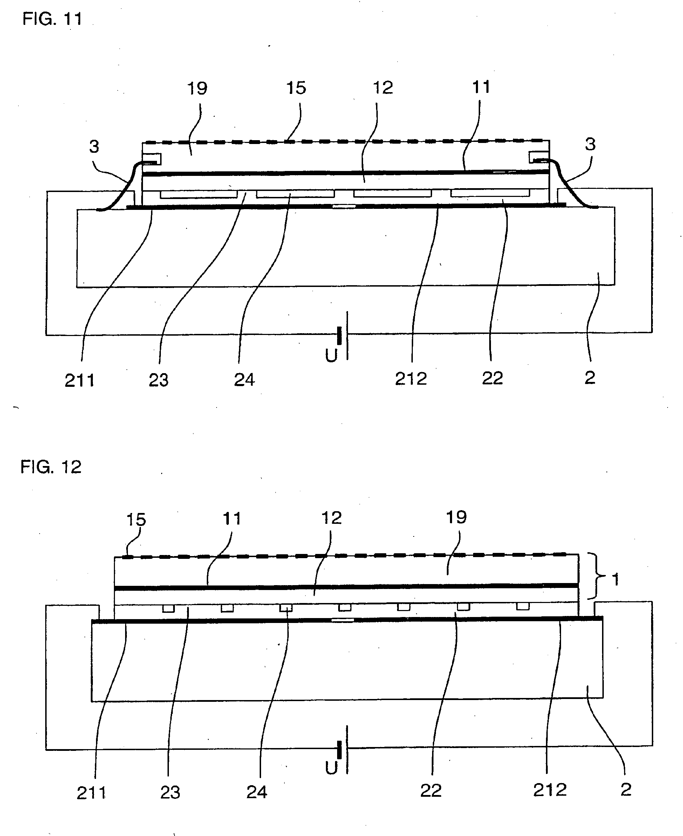

Das Ausführungsbeispiel gemäß Figur 11 entspricht weitgehend der Ausführung gemäß Figur 3, nur dass zusätzliche mechanische Befestigungselemente 3 vorgesehen sind, die den Maßstab 1 bei einem Ausfall der Spannungsversorgung U trotzdem sicher festhalten. Die Befestigungselemente 3 fixieren den Maßstab 1 vorteilhafterweise an Stellen, die entfernt zu einer Messteilung 15 zur Positionsmessung liegen. Die Befestigungselemente 3 können Federelemente 3 sein, die in Randflächen des Maßstabs 1 eingefräste Taschen eingreifen.

Die in Figur 12 dargestellte Ausführung kombiniert die Befestigungsart Ansprengen mit der der elektrostatischen Klemmung. Die sich gegenüberliegenden Außenflächen des Dielektrikums 12 des Maßstabs 1 und des Dielektrikums 22 des Trägers 2 werden dazu aneinander angesprengt. Wenn die Rauheit der Dielektrika 12, 22 nicht ausreichend klein ist, müssen sie nach der Schichtaufbringung (Bedampfen, Sputtern oder Plasmaprozess PECVD) noch leicht poliert werden. Bei dieser Befestigung benötigt man keine redundante Ausführung von mehreren Elektrodenpaaren, da stets eine ausreichende Anpresskraft vorhanden ist. In den Randzonen der Montagefläche verhindert die elektrostatische Klemmung das Abschälen der Ansprengung, da die langreichweitigen elektrostatischen Kräfte auch bei schlechten lokalen Kontaktverhältnissen, bei denen die kurzreichweitigen van-der-Waals-Kräften bereits sehr gering werden oder gar nicht mehr vorhanden sind, einen ausreichenden Anpressdruck gewährleisten. Vorteilhafterweise sind die Kontaktflächen unterbrochen, damit während der Montage keine Luftblasen in den Kontaktflächen eingeschlossen werden, bzw. die noch verbliebenen Luftreste in den Kontaktflächen in kurzer Zeit entweichen können. Die Ausbildung der elektrostatischen Klemmung entspricht dabei dem Ausführungsbeispiel gemäß Figur 3.

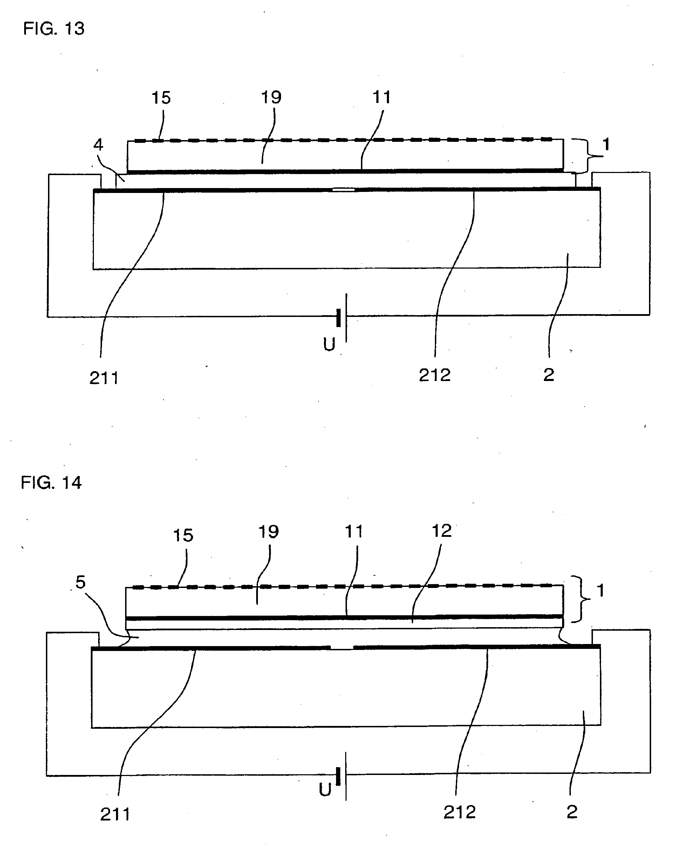

Beim Ausführungsbeispiel gemäß Figur 13 ist das Dielektrikum 12, 22 der vorhergehenden Beispiele durch eine dünne Folie 4 realisiert, die zwischen dem Maßstab 1 und dem Träger 2 eingebracht wird. Der Maßstab 1 und der Träger 2 müssen in diesem Falle nur mit einer einfachen Elektrodenschicht 11, 211, 212 versehen werden, was in einem Bedampfungsschritt erfolgen kann. Die Kosten können dadurch erheblich reduziert werden. Als Folie 4 kommen Kunststofffolien z.B. aus Teflon in Frage, aber auch Dünnglasfolien. Die Foliendicken liegen vorteilhafterweise im Bereich 20 - 400 $\mu$m. Besonders vorteilhaft ist diese Befestigungsart, wenn Maßstäbe 1 aus Metall verwendet werden. Sie können ohne Beschichtung eingesetzt werden, da sie selbst die Elektrode 11 bilden.

Bei dem Ausführungsbeispiel gemäß Figur 14 wird zwischen dem Dielektrikum 12 des Maßstabs 1 und der außenliegenden Metallschicht 211, 212 des Trägers 2 ein Ölfilm 5 eingebracht. Er bleibt aufgrund seiner Kapilarkräfte in dem sehr dünnen Spaltbereich eingegrenzt. Dieser Ölfilm 5 verhindert zum einen, dass kleine Luftvolumina zwischen dem Maßstab 1 und dem Träger 2 eingeschlossen werden, in denen bei hoher Feldstärke auch Koronaentladungen auftreten können. Zum anderen kann bei unterschiedlicher thermischer Ausdehnung oder Verspannung des Trägers 2 der Maßstab 1 über dem Ölfilm 5 gleiten und so seine Länge behalten. Diese Montageart ist besonders interessant, wenn der Träger 2 eine starke thermische Ausdehnung (wie z.B. bei Aluminium) und der Maßstab 1 eine sehr kleine thermische Ausdehnung (wie z.B. bei Zerodur) aufweist.

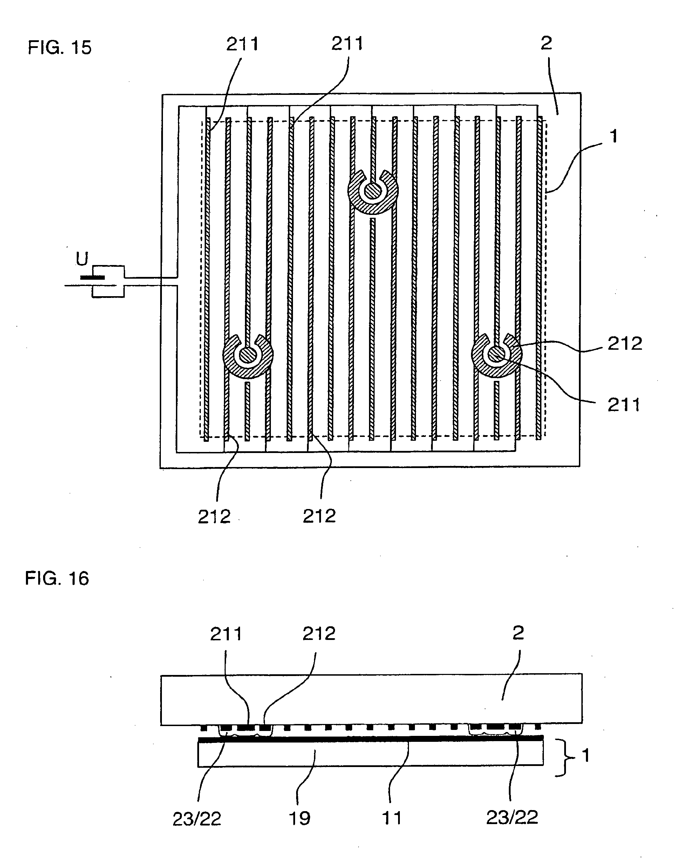

In den Figuren 15 und 16 ist eine vorteilhafte kinematische Dreipunktmontage eines flächigen Maßstabs 1 (insbesondere einer Kreuzgitterplatte), der hängend an dem Träger 2 befestigt ist dargestellt. Figur 15 zeigt die Draufsicht auf die räumliche Anordnung der Elektroden 211, 212 auf dem Träger 2 und Figur 16 einen Querschnitt im Bereich von zwei Auflagepunkten mit dem Maßstab 1. Der Maßstab 1 weist wieder die Elektrode 11 auf und am Träger 2 sind die spannungsführenden Elektroden 211 und 212 angeordnet. Der Maßstab 1 liegt nur an drei flächig verteilt angeordneten Erhebungen 23 am Träger 2 auf. Die Erhebungen 23 sind von punktförmig angeordneten Bereichen des Dielektrikums 22 des Trägers 2 gebildet. Bei einer Fixierung des Maßstabs 1 an nur drei Punkten wird er durch die Schwerkraft deformiert. Diese Deformation kann durch einen entsprechenden Anpressdruck kompensiert werden, der durch die elektrostatische Klemmung generiert wird und der der Schwerkraft genau entspricht und entgegenwirkt, aber der deutlich geringer sein muss als der Anpressdruck im Bereich der Kontaktflächen. Hierzu sind im Bereich der drei Erhebungen 23 großflächigere Elektroden 211, 212 als im übrigen Bereich außerhalb der Erhebungen 23 angeordnet. Das Ziel ist dabei, eine hohe Ebenheit und damit auch eine hohe Genauigkeit des Maßstabs 1 zu erreichen. Der geringere Anpressdruck außerhalb der Erhebungen 23 und somit außerhalb der Kontaktflächen kann auf einfache Weise durch eine entsprechende Strukturierung mit schmalen aber weit beabstandeten Elektrodenflächen 211, 212 erreicht werden. Im Bereich der Kontaktstellen muss dagegen die Flächenbelegung mit Elektroden 211, 212 hoch sein. Alternativ können die Erhebungen 23 (Kontaktflächen) und die übrigen Montageflächen mit jeweils zwei unabhängigen Elektrodenpaaren belegt und mit getrennten Spannungsquellen versorgt werden. Durch einfaches Wählen der Spannung lässt sich damit die Haltekraft ortsabhängig variieren und damit Deformationen des Maßstabs 1 minimieren.

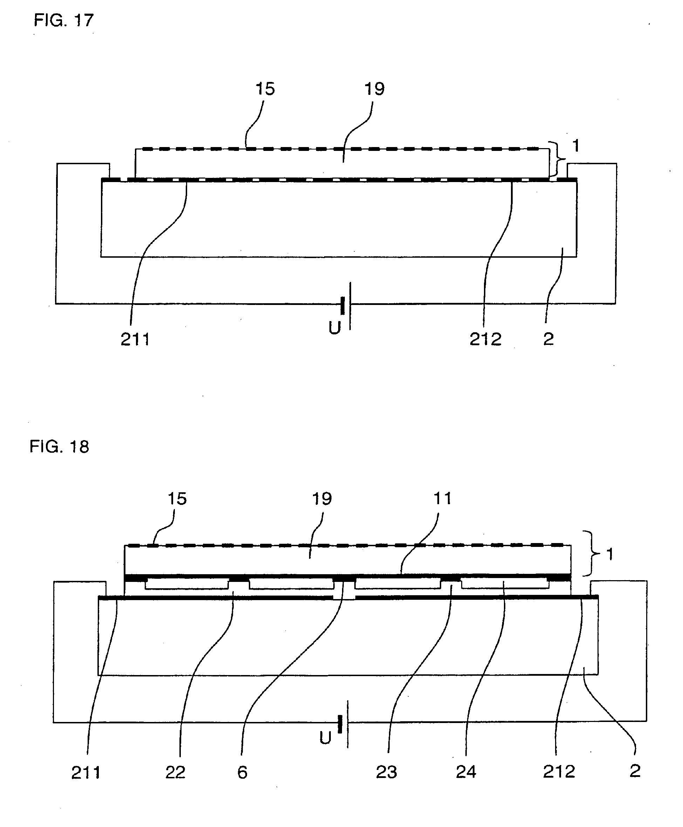

Bei der in Figur 17 dargestellten Ausführungsform sind Elektroden allein auf dem Maßstab 1 oder alternativ allein auf dem Träger 2 erforderlich. Auf dem Träger 2 wird eine vielfache Anordnung von Paaren von Elektroden 211, 212 vorgesehen, die jeweils paarweise miteinander verbunden sind. Diese Anordnung und der daraus resultierende Effekt ist beispielsweise in der US 5,838,529 erläutert, auf die ausdrücklich Bezug genommen wird Die Elektrodenstrukturen müssen kleine laterale Abstände zwischen 1 µm und 500 µm aufweisen, um ein möglichst inhomogenes, elektrisches Feld zu erzeugen. Das Substrat 19 des Maßstabs 1 besteht in dieser Ausführungsform aus einem nahezu isolierenden Material, das aber einen gewissen Anteil beweglicher Ladungen aufweist. Bewegliche Ladungen können z.B. Ionen (z.B. Na+) oder ionisierbare Störstellen sein, die ein Springen der Ladung von Störstelle zu Störstelle zulassen. Geeignete Materialien sind z.B. natriumhaltige Glassorten und Zerodur. Durch das elektrische Feld, das von den Elektroden 211, 212 des Trägers 2 hervorgerufen wird, werden nun die beweglichen Ladungen in den Maßstab 1 verschoben, so dass nahe an der Grenzfläche zum Träger 2 eine elektrische Aufladung entsteht. Die Aufladung ist dabei entgegengesetzt zu der Ladung auf der angrenzenden Elektrode. Aufgrund dieses Potentialunterschieds entsteht eine Anziehungskraft, die in der Praxis erstaunlich hohe Werte erreichen kann. Der Aufwand für diese Ausführung ist sehr gering. Diese Ausführung hat aber darüber hinaus noch einen weiteren Vorteil: Wenn die Spannungsversorgung ausfällt, so bleibt trotzdem die Aufladung in dem Maßstab 1 erhalten und klingt nur sehr langsam ab. Abklingzeiten von mehreren Tagen können durchaus erreicht werden. Entsprechend langsam klingt auch die Anziehungskraft ab. Dies gibt einen zusätzlichen Schutz vor kurzzeitigen Spannungsunterbrechungen.

Dieser Effekt der langsam abklingenden Haltekraft kann grundsätzlich auch zusätzlich für alle oben erläuterten Ausführungen genutzt werden, wenn Dielektrika 12 bzw. 22 bzw. 4 eingesetzt werden, die bewegliche Ladungen aufweisen. Meist ist dann der Anpressdruck auch deutlich höher, da die Abstände zwischen den entgegengesetzten Ladungen geringer sind (Johnson Rahbeck Effekt). Die Ausnutzung dieses Effekts ist gerade zur Befestigung des Maßstabs 1 zur hochgenauen lichtelektrischen Positionsmessung vorteilhaft, da hier Maßstäbe 1 aus Glaskeramik, insbesondere Zerodur eingesetzt werden.

Der oben erwähnte Johnson Rahbeck Effekt kann allerdings auch zu undefinierten Anpressdrücken führen, wenn die Dichte der beweglichen Ladungen oder ihre Beweglichkeit ungleichmäßig verteilt ist. Auch kann die langsame Zunahme der Anpressdrücke durch die geringe Beweglichkeit in Kombination mit nicht perfekt ebenen Maßstäben 1 oder Trägern 2 zu sich ändernden Spannungen in dem Maßstab 1 führen. In diesen Fällen ist es vorteilhaft, den Johnson Rahbeck Effekt zu unterdrücken. Eine Ausführungsform dazu ist in Figur 18 gezeigt. Der Maßstab 1 wird an der Unterseite mit einer flächigen Elektrode 11, beispielsweise einer Metallschicht 11 beschichtet. Der Träger 2 trägt ein Elektrodenpaar 211, 212, das mit einem Dielektrikum 22 abgedeckt ist, und das vorzugsweise zur Bildung von Erhebungen 23, welche die Kontaktstellen bilden, dicker ausgeführt wird. Der Bereich zwischen den Erhebungen 23 bildet die Kanäle 24. Auf die Erhebungen 23 des Dielektrikums 22 wird jeweils eine elektrisch leitende Schicht, z.B. eine Metallschicht 6 aufgebracht, die im elektrischen Kontakt mit der Elektrode 11 des Maßstabs 1 steht. Das Dielektrikum 22 hat nun keinen direkten Kontakt mehr mit der gegenüberliegenden Elektrode 11 des Maßstabs 1. Der Einfluss der beweglichen Ladungen in dem Dielektrikum 22 wird dadurch erheblich abgeschwächt. Der Anpressdruck entsteht nur in den Bereichen außerhalb der Kontaktflächen, also außerhalb der Erhebungen 23.

Bei allen Ausführungsformen kann der Schichtaufbau des Maßstabs 1 derart gewählt werden, dass in den Schichten hervorgerufene mechanische Spannungen kompensiert werden. Hierzu sind das Schichtenmaterial und die Schichtdicken so bestimmt, dass in diesen Schichten hervorgerufene mechanische Spannungen sich gegenseitig kompensieren. Alternativ können die Schichten (Elektroden und/oder Dielektrika) eine feine Strukturierung aufweisen.

In nicht dargestellter Weise können alle Strukturelemente des Maßstabs 1, die für die elektrostatische Klemmung notwendig sind, mit denen des Trägers 2 vertauscht werden.

Wie bereits ausgeführt, werden zur mehrdimensionalen Positionsmessung vermehrt Maßstäbe 1 mit einer zweidimensionalen Messteilung 15, insbesondere mit einer sich kreuzenden Messteilung, auch Kreuzgitter genannt, eingesetzt. Dabei ist es notwendig relativ großformatige Maßstäbe 1 (etwa 40 cm x 40 cm) auf einer Fläche eines Trägers 2 zu befestigen. Besonders bei Lithographie-Geräten, bei denen der Träger 2, an dem der Maßstab 1 zu befestigen ist, aus Glaskeramik (z.B. ZERODUR) mit einem Ausdehnungskoeffizienten nahe Null bestehen, ist die Erfindung vorteilhaft einsetzbar. Eine derartige Maschine mit einem Maßstab mit einer zweidimensionalen Messteilung ist in der US 2004/0263846 A1 erläutert, auf die hier Bezug genommen wird.

Dabei kann es erforderlich sein, dass mehrere Maßstäbe 1 zweidimensional nebeneinander mosaikartig auf einer Maschinenfläche 2 von beispielsweise 1 m x 2m befestigt werden müssen, um den erforderlichen Messbereich von etwa 1 m x 2m abzudecken. Die Maßstäbe 1 mit der insbesondere lichtelektrisch abtastbaren Messteilung 15 sind in der erforderlichen Präzision nämlich nur in Größen von etwa 40cm x 40cm relativ unkompliziert in der geforderten Qualität fertigbar. Jeder dieser Maßstäbe 1 mit einer zweidimensionalen Messteilung 15, auch Kreuzgitter genannt, kann nun erfindungsgemäß am Maschinenteil 2 als Träger befestigt werden.

Die grundsätzlichen Vorteile der elektrostatischen Klemmung des Maßstabs 1 an dem Träger 2 sind:

Der Kraftweg ist extrem kurz und schließt nur den Bereich zwischen der Metallschicht 11 des Maßstabs 1 und der Metallschicht 211, 212 des Trägers 2 ein. Er bleibt damit auf das Volumen des Dielektrikums 12, 22 beschränkt. Der Maßstab 1 und der Träger 2 bleiben damit fast vollständig spannungsfrei. Restspannungen in dem Maßstab 1 entstehen in der Praxis nur dann, wenn die Kontaktflächen nicht eben sind. Die Spezifikation der Ebenheiten muss den Anforderungen entsprechend ausgelegt werden.

Der Anpressdruck ist gleichmäßig auf die Kontaktflächen verteilt. Auch wenn kleine Staubpartikel zwischen den Kontaktflächen eingeschlossen sind, wird der Anpressdruck kaum davon beeinflusst, da die Abstandsabhängigkeit nur mit $1/d^2$ abfällt. Die van-der-Waals-Kräfte einer Ansprengung fallen dagegen mit $1/d^6$ ab und bleiben nur auf atomare Abstände beschränkt. Der Anpressdruck einer Ansprengung ist deshalb in der Praxis sehr ungleichmäßig und undefiniert. Wenn der Anpressdruck ungleichmäßig verteilt ist und der Maßstab und der Träger sich unterschiedlich thermisch ausdehnen, kann es zu lokalen Verschiebungen zwischen Maßstab und Träger kommen, was in hochgenauen Anwendungen nicht akzeptiert werden kann.

Die elektrostatische Verbindung ist lösbar, defekte Maßstäbe 1 können bei Erfordernis ausgetauscht werden. Die Festigkeit der elektrostatischen Verbindung kann bei geeigneter Wahl des Dielektrikums 12 und 22, seiner Dicke und Durchschlagsfestigkeit sowie der angelegten Spannung U die einer Ansprengung übersteigen.

Durch den extrem kurzen Kraftweg bleibt bei entsprechend ebenen Kontaktflächen die Verformung des Maßstabs 1 äußerst gering. Dadurch wird eine hohe Driftstabilität und Genauigkeit erreicht.

Falls unterschiedliche thermische Ausdehnungen von Maßstab 1 und Träger 2 vorliegen, kann bei Temperaturänderungen eine Verspannung des Maßstabs 2 auftreten, die zu Messfehlern führt. In der Praxis tritt dies z.B. bei einem Maßstab 1 aus Zerodur und einem Träger 2 mit hoher thermischer Ausdehnung wie z.B. aus Aluminium auf. Durch kurzzeitiges Abschalten der Spannung U kann die Anpresskraft (Klemmkraft, Haltekraft) gelöst werden, so dass sich die Verspannungen des Maßstabs 1 wieder ausgleichen. Die volle Messgenauigkeit wird wieder erreicht. Die Zeitintervalle zwischen den kurzzeitigen Spannungsabschaltungen können sich an den typischen Zeitintervallen für relevante Temperaturänderungen orientieren. Der gesamte Vorgang kann auf einfache Weise elektronisch ohne manuelles Eingreifen gesteuert werden.

Die Flächen, an denen der Maßstab 1 Kontakt mit dem Träger 2 hat (Kontaktflächen) und die Flächen, die zur Krafteinleitung genutzt werden (sich gegenüberstehende und überlappende Elektroden 11 des Maßstabs 1 und Elektroden 211, 212 des Trägers 2), können beliebig strukturiert werden und müssen nicht - wie beim Ansprengen - mit der gesamten zugewandten Fläche von Maßstab und Träger (Montagefläche) identisch sein.

Im Gegensatz zur Ansprengung können der Maßstab 1 und/oder der Träger 2 im Bereich der Montageflächen bzw. Kontaktflächen auch unpoliert bleiben, was den Aufwand erheblich senken kann. In einzelnen Ausführungsformen mit nur wenigen Kontaktflächen, insbesondere bei einer Dreipunktauflage (kinematische Montage), entfallen zudem die Anforderungen an die Ebenheit der Montageflächen. Auch dies kann die Herstellkosten erheblich senken.

**Patentansprüche**

1. Verfahren zum Halten eines eine Messteilung (15) aufweisenden Maßstabs (1) an einem Träger (2), **dadurch gekennzeichnet, dass** der Maßstab (1) mittels elektrostatischer Klemmung am Träger (2) gehalten wird, indem eine Potentialdifferenz zwischen dem Maßstab (1) und dem Träger (2) generiert wird, wobei sich am Maßstab (1) nahe der Grenzfläche zum Träger (2), welche der Messteilung (15) direkt gegenüberliegend angeordnet ist, eine elektrische Gegenladung gegenüber dem Träger (2) ausbildet, und die mechanische Kontaktierung zwischen Maßstab (1) und Träger (2) an mehreren voneinander beabstandeten Erhebungen (23) erfolgt, wobei die Erhebungen (23) in einer Ebene zwischen Maßstab (1) und Träger (2) zweidimensional verteilt angeordnet sind, und dass zwischen den Erhebungen (23) Kanäle (24) ausgebildet sind, die nach außen führen um mit der Umgebung in Verbindung zu stehen.

2. Verfahren nach Anspruch 1, **dadurch gekennzeichnet, dass** durch Anlegen einer elektrischen Spannung (U) zwischen Elektroden des Maßstabs (1) oder zwischen Elektroden (211, 212, 213, 214) des Trägers (2) sich die Potentialdifferenz zwischen dem Maßstab (1) und dem Träger (2) ausbildet, welche die Haltekraft generiert.

3. Verfahren nach Anspruch 1, **dadurch gekennzeichnet, dass** durch Anlegen einer elektrischen Spannung (U) zwischen einer Elektrode (212) des Maßstabs (1) und einer Elektrode (211) des Trägers (2) sich die Potentialdifferenz zwischen dem Maßstab (1) und dem Träger (2) ausbildet, welche die Haltekraft generiert.

4. Verfahren nach einem der vorhergehenden Ansprüche, **dadurch gekennzeichnet, dass** der Maßstab (1) mittels eines weiteren Befestigungsverfahrens zusätzlich am Träger (2) gehalten wird.

5. Verfahren nach Anspruch 4, **dadurch gekennzeichnet, dass** das weitere Befestigungsverfahren mechanisches Klemmen ist.

6. Verfahren nach Anspruch 4, **dadurch gekennzeichnet, dass** das weitere Befestigungsverfahren Ansprengen ist.

7. Verfahren nach einem der vorhergehenden Ansprüche, **dadurch gekennzeichnet, dass** die Haltekraft der elektrostatischen Klemmung ortsabhängig variiert.

8. Anordnung mit einem Träger (2) und mit einem eine Messteilung (15) aufweisenden Maßstab (1), **dadurch gekennzeichnet, dass** der Maßstab (1) mittels elektrostatischer Klemmung am Träger (2) befestigbar ist, indem ein Potentialdifferenz zwischen dem Maßstab (1) und dem Träger (2) generiert wird, wobei sich am Maßstab (1) nahe der Grenzfläche zum Träger (2), welche der Messteilung (15) direkt gegenüberliegend angeordnet ist, eine elektrische Gegenladung gegenüber dem Träger (2) ausbildet, und die mechanische Kontaktierung zwischen Maßstab (1) und Träger (2) an mehreren voneinander beabstandeten Erhebungen (23) erfolgt, wobei die Erhebungen (23) in einer Ebene zwischen Maßstab (1) und Träger (2) zweidimensional verteilt angeordnet sind, und dass zwischen den Erhebungen (23) Kanäle (24) ausgebildet sind, die nach außen führen um mit der Umgebung in Verbindung zu stehen.

9. Anordnung nach Anspruch 8, **dadurch gekennzeichnet, dass** der Maßstab (1) eine erste Elektrode (212) und der Träger (2) eine zweite Elektrode (211) aufweist, und dass zwischen beiden Elektroden (211, 212) eine elektrische Spannung (U) anlegbar ist, wobei die erste Elektrode (212) und die zweite Elektrode (211) derart angeordnet und ausgebildet ist, dass sich bei angelegter Spannung (U) die Potentialdifferenz zwischen der ersten Elektrode (212) und der zweiten Elektrode (211) ausbildet, welche die Haltekraft generiert.

10. Anordnung nach Anspruch 8, **dadurch gekennzeichnet, dass** eines der Elemente Maßstab (1) oder Träger (2) eine erste Elektrode (212) aufweist und eine zweite Elektrode (211) aufweist, und dass zwischen beiden Elektroden (211, 212) eine elektrische Spannung (U) anlegbar ist, wobei das andere der Elemente Maßstab (1) oder Träger (2) derart ausgebildet ist, dass sich bei angelegter Spannung (U) jeweils die Potentialdifferenz zwischen der ersten Elektrode (212) und dem anderen der Elemente sowie zwischen der zweiten Elektrode (211) und dem anderen der Elemente ausbildet, welche die Haltekraft generiert.

11. Anordnung nach Anspruch 10, **dadurch gekennzeichnet, dass** das andere der Elemente Maßstab (1) oder Träger (2) eine dritte Elektrode (11) aufweist, wobei die Elektroden (211, 212, 11) derart ausgebildet und angeordnet sind, dass sich bei angelegter Spannung (U) zwischen der ersten Elektrode (212) und der zweiten Elektrode (211) jeweils die Potentialdifferenz zwischen der ersten Elektrode (212) und der dritten Elektrode (11) sowie zwischen der zweiten Elektrode (211) und der dritten Elektrode (11) ausbildet, welche die Haltekraft generiert.

12. Anordnung nach Anspruch 10 oder 11, **dadurch gekennzeichnet, dass** der Träger (2) die erste Elektrode (212) sowie die zweite Elektrode (211) aufweist.

13. Anordnung nach Anspruch 11, **dadurch gekennzeichnet, dass** der Träger (2) die erste Elektrode (212) sowie die zweite Elektrode (211) aufweist, und dass der Maßstab (1) die dritte Elektrode (11) aufweist.

14. Anordnung nach Anspruch 13, **dadurch gekennzeichnet, dass** die dritte Elektrode (11) eine elektrisch leitende Schicht eines elektrisch nichtleitenden Substrats (19) des Maßstabs (1) ist.

15. Anordnung nach einem der vorhergehenden Ansprüche, **dadurch gekennzeichnet, dass** zwischen der Elektrode (11) des Maßstabs (1) und der Elektrode (211, 212) des Trägers (2) ein Dielektrikum (12; 22; 4) angeordnet ist.

16. Anordnung nach einem der vorhergehenden Ansprüche, **dadurch gekennzeichnet, dass** der Maßstab (1) ein elektrisch nicht leitendes Substrat (19) aus Glas oder Glaskeramik aufweist.

17. Anordnung nach einem der vorhergehenden Ansprüche 8 bis 16, **dadurch gekennzeichnet, dass** die Erhebungen (23) in den Besselpunkten des Maßstabs (1) angeordnet sind.

18. Anordnung nach einem der vorhergehenden Ansprüche 8 bis 16, **dadurch gekennzeichnet, dass** die Erhebungen (23) eine kinematische Dreipunktlagerung zwischen Maßstab (1) und Träger (2) bilden.

19. Anordnung nach einem der vorhergehenden Ansprüche, **dadurch gekennzeichnet, dass** zwischen dem Maßstab (1) und dem Träger (2) ein Flüssigkeitsfilm (5) angeordnet ist.

20. Anordnung nach Anspruch 19, **dadurch gekennzeichnet, dass** der Flüssigkeitsfilm (5) ein Ölfilm ist.

21. Anordnung nach einem der vorhergehenden Ansprüche 8 bis 20, **dadurch gekennzeichnet, dass** die Haltekraft ortsabhängig variiert, indem die Flächenbelegung mit Elektroden (11, 211, 212) ortsabhängig variiert und/oder die elektrische Spannung (U) an den Elektroden (211, 212) ortsabhängig unterschiedlich ist.

**Claims**

1. Method for holding a scale (1) having measuring graduation (15) on a carrier (2), **characterized in that** the scale (1) is held on the carrier (2) by means of electrostatic clamping by virtue of a potential difference between the scale (1) and the carrier (2) being generated, wherein an electrical countercharge with respect to the carrier (2) is formed on the scale (1) close to the interface with the carrier (2), which is arranged directly opposite the measuring graduation (15), and the mechanical contact-making between the scale (1) and the carrier (2) is performed at a plurality of elevations (23) which are spaced apart from one another, wherein the elevations (23) are arranged distributed two-dimensionally in a plane between the scale (1) and the carrier (2), and **in that** channels (24) are formed between the elevations (23), said channels leading outwards in order to be connected to the surrounding environment.

2. Method according to Claim 1, **characterized in that** the potential difference between the scale (1) and the carrier (2), which generates the holding force, is formed by application of an electric voltage (U) between electrodes of the scale (1) or between electrodes (211, 212, 213, 214) of the carrier (2).

3. Method according to Claim 1, **characterized in that** the potential difference between the scale (1) and the carrier (2), which generates the holding force, is formed by application of an electric voltage (U) between an electrode (212) of the scale (1) and an electrode (211) of the carrier (2).

4. Method according to one of the preceding claims, **characterized in that** the scale (1) is additionally held on the carrier (2) by means of a further fastening method,

5. Method according to Claim 4, **characterized in that** the further fastening method is mechanical clamping.

6. Method according to Claim 4, **characterized in that** the further fastening method is wringing.

7. Method according to one of the preceding claims, **characterized in that** the holding force of the electrostatic clamping varies in location-dependent fashion.

8. Arrangement comprising a carrier (2) and comprising a scale (1) having measuring graduation (15), **characterized in that** the scale (1) can be fastened on the carrier (2) by means of electrostatic clamping by virtue of a potential difference between the scale (1) and the carrier (2) being generated, wherein an electrical countercharge with respect to the carrier (2) is formed on the scale (1) close to the interface to the carrier (2), which is arranged directly opposite the measuring graduation (15), and the mechanical contact-making between the scale (1) and the carrier (2) is performed at a plurality of elevations (23) spaced apart from one another, wherein the elevations (23) are arranged distributed two-dimensionally in a plane between the scale (1) and the carrier (2), and **in that** channels (24) are formed between the elevations (23) and pass to the outside in order to be connected to the surrounding environment.

9. Arrangement according to Claim 8, **characterized in that** the scale (1) has a first electrode (212), and the carrier (2) has a second electrode (211), and **in that** an electric voltage (U) can be applied between the two electrodes (211, 212), wherein the first electrode (212) and the second electrode (211) are arranged and designed in such a way that, when a voltage (U) is applied, the potential difference between the first electrode (212) and the second electrode (211) is formed, which potential difference generates the holding force.

10. Arrangement according to Claim 8, **characterized in that** one of the elements comprising the scale (1) and the carrier (2) has a first electrode (212) and a second electrode (211), and **in that** an electric voltage (U) can be applied between the two electrodes (211, 212), wherein the other of the elements comprising the scale (1) and the carrier (2) is designed in such a way that, when a voltage (U) is applied, in each case the potential difference between the first electrode (212) and the other of the elements and between the second electrode (211) and the other of the elements is formed, which potential difference generates the holding force.

11. Arrangement according to Claim 10, **characterized in that** the other of the elements comprising the scale (1) and the carrier (2) has a third electrode (11), wherein the electrodes (211, 212, 11) are designed and arranged in such a way that, when a voltage (U) is applied between the first electrode (212) and the second electrode (211), in each case the potential difference between the first electrode (212) and the third electrode (11) and between the second electrode (211) and the third electrode (11) is formed, which potential difference generates the holding force.

12. Arrangement according to Claim 10 or 11, **characterized in that** the carrier (2) has the first electrode (212) and the second electrode (211).

13. Arrangement according to Claim 11, **characterized in that** the carrier (2) has the first electrode (212) and the second electrode (211), and **in that** the scale (1) has the third electrode (11).

14. Arrangement according to Claim 13, **characterized in that** the third electrode (11) is an electrically conductive layer of an electrically nonconductive substrate (19) of the scale (1).

15. Arrangement according to one of the preceding claims, **characterized in that** a dielectric (12; 22; 4) is arranged between the electrode (11) of the scale (1) and the electrode (211, 212) of the carrier (2).

16. Arrangement according to one of the preceding claims, **characterized in that** the scale (1) has an electrically nonconductive substrate (19) consisting of glass or glass ceramic.

17. Arrangement according to one of the preceding Claims 8 to 16, **characterized in that** the elevations (23) are arranged at the Bessel points on the scale (1).

18. Arrangement according to one of the preceding Claims 8 to 16, **characterized in that** the elevations (23) form a kinematic three-point bearing arrangement between the scale (1) and the carrier (2).

19. Arrangement according to one of the preceding claims, **characterized in that** a liquid film (5) is arranged between the scale (1) and the carrier (2).

20. Arrangement according to Claim 19, **characterized in that** the liquid film (5) is a film of oil.

21. Arrangement according to one of the preceding Claims 8 to 20, **characterized in that** the holding force varies depending on the location by virtue of the occupation of the area with electrodes (11, 211, 212) being varied depending on the location and/or the electric voltage (U) at the electrodes (211, 212) being different depending on the location.

**Revendications**

1. Procédé pour maintenir sur un support (2) une règle (1) possédant une graduation de mesure (15), **caractérisé en ce que** la règle (1) est maintenue sur le support (2) au moyen d'un serrage électrostatique **en ce qu'**une différence de potentiel est générée entre la règle (1) et le support (2), une charge électrique opposée à celle du support (2) se formant sur la règle (1) à proximité de l'interface avec le support (2) qui se trouve directement à l'opposé de la graduation de mesure (15), et la mise en contact mécanique entre la règle (1) et le support (2) s'effectuant au niveau de plusieurs bossages (23) espacés les uns des autres, les bossages (23) étant disposés selon une distribution bidimensionnelle dans un plan entre la règle (1) et le support (2), et **en ce que** des canaux (24) sont formés entre les bossages (23), lesquels mènent vers l'extérieur et sont en liaison avec l'environnement.

2. Procédé selon la revendication 1, **caractérisé en ce que** la différence de potentiel entre la règle (1) et le support (2) qui génère la force de maintien se forme par l'application d'une tension électrique (U) entre des électrodes de la règle (1) ou entre des électrodes (211, 212, 213, 214) du support (2).

3. Procédé selon la revendication 1, **caractérisé en ce que** la différence de potentiel entre la règle (1) et le support (2) qui génère la force de maintien se forme par l'application d'une tension électrique (U) entre une électrode (212) de la règle (1) et une électrode (211) du support (2).

4. Procédé selon l'une des revendications précédentes, **caractérisé en ce que** la règle (1) est en plus maintenue contre le support (2) au moyen d'un procédé de fixation supplémentaire.

5. Procédé selon la revendication 4, **caractérisé en ce que** le procédé de fixation supplémentaire est le serrage mécanique.

6. Procédé selon la revendication 4, **caractérisé en ce que** le procédé de fixation supplémentaire est l'accolage.

7. Procédé selon l'une des revendications précédentes, **caractérisé en ce que** la force de maintien du serrage électrostatique varie en fonction de l'endroit.

8. Arrangement comprenant un support (2) et comprenant une règle (1) possédant une graduation de mesure (15), **caractérisé en ce que** la règle (1) peut être fixée au support (2) au moyen d'un serrage électrostatique **en ce qu'**une différence de potentiel est générée entre la règle (1) et le support (2), une charge électrique opposée à celle du support (2) se formant sur la règle (1) à proximité de l'interface avec le support (2) qui se trouve directement à l'opposé de la graduation de mesure (15), et la mise en contact mécanique entre la règle (1) et le support (2) s'effectuant au niveau de plusieurs bossages (23) espacés les uns des autres, les bossages (23) étant disposés selon une distribution bidimensionnelle dans un plan entre la règle (1) et le support (2), et **en ce que** des canaux (24) sont formés entre les bossages (23), lesquels mènent vers l'extérieur et sont en liaison avec l'environnement.

9. Arrangement selon la revendication 8, **caractérisé en ce que** la règle (1) possède une première électrode (212) et le support (2) une deuxième électrode (211), et **en ce qu'**une tension électrique (U) peut être appliquée entre les deux électrodes (211, 212), la première électrode (212) et la deuxième électrode (211) étant disposées et configurées de telle sorte que la différence de potentiel entre la première électrode (212) et la deuxième électrode (211) qui génère la force de maintien se forme lorsque la tension (U) est appliquée.

10. Arrangement selon la revendication 8, **caractérisé en ce que** l'un des éléments règle (1) ou support (2) possède une première électrode (212) et une deuxième électrode (211), et **en ce qu'**une tension électrique (U) peut être appliquée entre les deux électrodes (211, 212), l'autre des éléments règle (1) ou support (2) étant configuré de telle sorte que la différence de potentiel entre la première électrode (212) et l'autre des éléments ainsi qu'entre la deuxième électrode (211) et l'autre des éléments qui génère la force de maintien se forme à chaque fois lorsque la tension (U) est appliquée.

11. Arrangement selon la revendication 10, **caractérisé en ce que** l'autre des éléments règle (1) ou support (2) possède une troisième électrode (11), les électrodes (211, 212, 11) étant configurées et disposées de telle sorte que la différence de potentiel entre la première électrode (212) et la troisième électrode (11) ainsi qu'entre la deuxième électrode (211) et la troisième électrode (11) qui génère la force de maintien se forme à chaque fois lorsque la tension (U) est appliquée entre la première électrode (212) et la deuxième électrode (211).

12. Arrangement selon la revendication 10 ou 11, **caractérisé en ce que** le support (2) possède la première électrode (212) ainsi que la deuxième électrode (211).

13. Arrangement selon la revendication 11, **caractérisé en ce que** le support (2) possède la première électrode (212) ainsi que la deuxième électrode (211) et **en ce que** la règle (1) possède la troisième électrode (11).

14. Arrangement selon la revendication 13, **caractérisé en ce que** la troisième électrode (11) est une couche électriquement conductrice d'un substrat (19) non électriquement conducteur de la règle (1).

15. Arrangement selon l'une des revendications précédentes, **caractérisé en ce qu'**un diélectrique (12 ; 22 ; 4) est disposé entre l'électrode (11) de la règle (1) et l'électrode (211, 212) du support (2).

16. Arrangement selon l'une des revendications précédentes, **caractérisé en ce que** la règle (1) possède un substrat (19) non électriquement conducteur en verre ou en vitrocéramique.

17. Arrangement selon l'une des revendications précédentes 8 à 16, **caractérisé en ce que** les bossages (23) sont disposés dans les points Bessel de la règle (1).

18. Arrangement selon l'une des revendications précédentes 8 à 16, **caractérisé en ce que** les bossages (23) forment un support cinématique à trois points entre la règle (1) et le support (2).

19. Arrangement selon l'une des revendications précédentes, **caractérisé en ce qu'**un film de liquide (5) est disposé entre la règle (1) et le support (2).

20. Arrangement selon la revendication 19, **caractérisé en ce que** le film de liquide (5) est un film d'huile.

21. Arrangement selon l'une des revendications précédentes 8 à 20, **caractérisé en ce que** la force de maintien varie en fonction de l'endroit **en ce que** l'occupation de la surface avec des électrodes (11, 211, 212) varie en fonction de l'endroit et/ou la tension électrique (U) aux bornes des électrodes (211, 212) est différente en fonction de l'endroit.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

211    211    2

U

212

211

212    212

FIG. 16

211    212    2

1

23/22    19    11    23/22

FIG. 17

FIG. 18

FIG. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10153147 A1
- US 5838529 A
- US 20040263846 A1